# EUROPÄISCHE PATENTANMELDUNG

(11) **EP 1 870 346 A1**
(43) Veröffentlichungstag der Anmeldung: **26.12.2007**
(21) Anmeldenummer: 07011982.1
(22) Anmeldetag: 19.06.2007
(51) Int. Cl.: B65D 47/08, B65D 47/24

(54) **Kunststoffverschlusssystem und Verfahren zu seiner Herstellung**

(30) Priorität: 19.06.2006 DE 102006028106
(71) Anmelder: Kühn, Hans, 76467 Bietigheim (DE)
(72) Erfinder: Kühn, Hans, 76467 Bietigheim (DE)
(74) Vertreter: Jones Day

(57) **Zusammenfassung**

Kunststoffverschlusssystem aus Kappe (2) und Unterteil (1), wobei die Kappe eine Ausformung aufweist, die mit einer Austrittsöffnung (7) des Unterteils im verschlossenen Zustand letztere dichtfest verschließt, und wobei zumindest eine Dichtfläche (3,4) der Austrittsöffnung oder der Ausformung aus einem anderen Kunststoff als die Kappe (2) oder das Unterteil (1) gefertigt ist und wobei dieser andere Kunststoff eine höhere Elastizität aufweist.

## Beschreibung

### 1. Technisches Gebiet

Die Erfindung bezieht sich auf Kunststoffverschlusssysteme, Behälter, die derartige Verschlusssystem aufweisen und Herstellungsverfahren für die Kunststoffverschlusssysteme.

### 2. Stand der Technik

Herkömmliche Behälter für Flüssigkeiten wie z.B. Kosmetika, Fruchtsäfte, Reinigungsmittel usw. wurden früher meist aus Glas oder Aluminium hergestellt und mit einer aus Kunststoff hergestellten Kappe mit einem komplementär ausgebildeten Schraubgewinde versehen. Eine hinreichend sichere Befestigung der Kappe auf dem Behälterkörper wurde dadurch erreicht, dass die zusammenwirkenden Schraubengewinde möglichst feingängig ausgebildet worden sind, so dass durch die entsprechend geringe Gewindesteigung und durch die Materialkombination Aluminum/Kunststoff oder Glas/Kunststoff die Kappe einen hinreichend festen Halt auf dem Behälterkörper hatte. Ein unbeabsichtigtes Lösen oder Lockern der Kappe vom Körper war somit verhindert. Seit neuerer Zeit treten aus Metall bestehende Tuben oder aus Glas bestehende Flaschen zunehmend in den Hintergrund und werden durch entsprechende Behälter aus Kunststoff ersetzt, was es ermöglicht, integrale Kunststoffverschlusssysteme aus Kunststoffkappe und entsprechendem Kunststoffunterteil zu verwenden. Ein Vorteil derartiger Systeme ist ihre kostengünstige Herstellung. Derartige Kunststoffverschlusssysteme sind z.B. Flipp-, Top-, Push-, Pull- oder Schraubverschlüsse. Insbesondere einkomponentige Verschlusssysteme, also Systeme, die aus demselben Material gefertigt sind, sind beispielsweise wegen der Formsteifigkeit des verwendeten Kunststoffs häufig so dimensioniert, dass ein hoher Öffnungsdruck notwendig ist, um den Verschluss zu öffnen. Ein häufiger Nachteil dieser Systeme kann darin bestehen, dass eine gute Dichtheit, insbesondere nach mehrmaligem Öffnen nicht erreicht wird.

Es ist eine Aufgabe der vorliegenden Erfindung, ein Verschlusssystem aus Kunststoff bereitzustellen, das ein leichtes Öffnen und dichtes Verschließen des Behälters auch bei mehrfacher Anwendung ermöglicht.

Es ist eine weitere Aufgabe der vorliegenden Erfindung, ein Verschlusssystem aus Kunststoff bereitzustellen, das ein leichtes Öffnen und dichtes Verschließen des Behälters auch bei mehrfacher Anwendung ermöglicht und einfach und kostengünstig herstellbar ist.

Eine weitere Aufgabe der vorliegenden Erfindung ist es, ein einfaches und kostengünstiges Verfahren für ein dichtschliessendes Verschlusssystem aus Kunststoff bereitzustellen.

Insbesondere geeignet ist die vorliegende Erfindung für integrale Kunststoffverschlusssysteme, wobei die Verschlusskappe und das entsprechende Unterteil aus demselben Material gefertigt sind.

### 3. Beschreibung der Erfindung

Die erfindungsgemäße Aufgabe wird dadurch gelöst, dass ein Kunststoffverschlussunterteil mit einer Austrittsöffnung und eine Kunststoffverschlusskappe, die mit der Austrittsöffnung verschließbar ist, bereitgestellt wird. Die Austrittsöffnung des Verschlusssystems weist dabei zumindest eine Fläche auf, die im geschlossenen Zustand des Verschlusssystems von einer passenden Fläche der Kappe berührt wird, was zur dichtfesten Verschließung der Austrittsöffnung führt. Diese Flächen an der Austrittsöffnung und an der Kappe werden im Folgenden als Dichtflächen bezeichnet.

Darüber hinaus kann das Verschlusssystem eine weitere Dichtfläche am Unterteil zur Dichtung gegenüber dem Behälter aufweisen.

In dem erfindungsgemäßen Verschlusssystem besteht mindestens eine dieser Dichtflächen aus einem elastischeren Material als die Verschlusskappe und/oder das Verschlussunterteil.

Die erfindungsgemäße Verschlusskappe ist derart ausgeformt, dass sie die Austrittsöffnung des Verschlussunterteils über ein oder mehrere Dichtflächen im geschlossenen Zustand dichtfest verschließt. Kappe und Austrittsöffnung können beispielsweise kraftfest, druckfest oder formfest verschließbar sein. Durch Kraft- öder Druckeinwirkung kann die Kappe von der Austrittsöffnung gelöst werden. Die Kappe und Austrittsöffnung können dabei in jeder aufeinander abgestimmten geometrischen Form ausgestaltet sein (beispielsweise rund, oval, eckig, sternförmig etc). Je nach (geometrischer) Ausgestaltung von Ausformung und Austrittsöffnung können diese jeweils eine oder mehrere Dichtflächen aufweisen.

Vorzugsweise besteht in der vorliegenden Erfindung mindestens eine Dichtfläche, insbesondere eine Dichtfläche der Kappe oder eine Dichtfläche des Verschlussunterteils, aus einem elastischeren Material als die Verschlusskappe und/oder das Verschlussunterteil. Dabei können die Dichtflächen an Austrittsöffnung und Kappe aus demselben Material oder aus unterschiedlichen Materialien sein.

Erfindungsgemäß ist mindestens eine Dichtfläche, beispielsweise die Dichtfläche an der Kappe, aus einem elastischeren Material als ihre Umgebung, beispielsweise die sie umgebende Kappe.

In einer Ausführungsform der Erfindung ist die Dichtfläche der Kappe aus einem elastischeren Material als die Verschlusskappe und/oder das Verschlussunterteil.

In einer anderen Ausführungsform der Erfindung ist die Dichtfläche der Austrittsöffnung aus einem elastischeren Material als die Verschlusskappe und/oder das Verschlussunterteil.

In einer anderen Ausführungsform der Erfindung sind sowohl die Dichtfläche der Austrittsöffnung als auch der Kappe aus einem elastischeren Material als die Verschlusskappe und Verschlussunterteil.

In einer weiteren Ausführungsform der Erfindung ist die Dichtfläche der Austrittsöffnung aus einem elastischeren Material als eine entsprechende Dichtfläche der Kappe.

In einer weiteren Ausführungsform der Erfindung ist die Dichtfläche der Austrittsöffnung aus einem weniger elastischeren Material als die entsprechende Dichtfläche der Kappe.

Es ist ebenfalls im Rahmen der Erfindung, dass nicht nur die Dichtflächen der Kappe, sondern die gesamte Kappe aus einem elastischeren Kunststoff als das Verschlussunterteil ist.

Ebenso ist es im Rahmen der Erfindung, dass eine Dichtfläche, entweder die Dichtfläche der Kappe oder die Dichtfläche der Austrittsöffnung, aus demselben Kunststoff ist wie die Kappe bzw. die Austrittsöffnung, wobei dann aber die entsprechende andere Dichtfläche aus einem elastischeren Material ist.

Das geeignete Material für Dichtflächen im Rahmen der Erfindung sind natürliche oder künstliche elastische Polymere. Die Elastizität lässt sich als Elastizitätskoeffizient ausdrücken, der in den einschlägigen Nachschlagewerken aufgeführt ist.

Experimentell lässt sich die Elastizität oder Weichheit des geeigneten Materials auch über die Shore-Härte bestimmen. Unter der Härte nach Shore wird der Widerstand gegen das Eindringen eines Körpers bestimmter Form unter definierter Federkraft verstanden. Die Shore-Härte kann nach DIN 53505 ermittelt werden (Shore Härte A).

Vorzugsweise ist das Material für die Dichtfläche ein thermoplastischer Kunststoff, Elast oder geschäumter geschlossenzelliger Hochpolymerwerkstoff. Besonders bevorzugt ist ein Material, das sich für das Spritzgussverfahren, das Laminatverfahren, oder das Koextrusionsverfahren eignet.

### Beispiele für geeignete Materialien sind:

Ethylen-Vinylacetat Copolymere (EVA), PVC-w, thermoplastische Polyurethane (TPU), Silikone (beispielsweise Polydimethylsiloxan), oder Mischungen davon oder Copolymere davon.

In einer bevorzugten Ausführungsform der Erfindung ist die Dichtfläche ein integraler Bestandteil der Verschlusskappe.

In einer anderen bevorzugten Ausführungsform ist die Dichtfläche ein integraler Bestandteil des Verschlussunterteils.

In einer besonders bevorzugten Ausführungsform der Erfindung weisen sowohl die Austrittsöffnung als auch die Kappe eine Dichtfläche auf, die jeweils ein integraler Bestandteil des Verschlusssystems sind. Damit ist gemeint, dass die Dichtfläche ein nicht abtrennbarer Bestandteil des Verschlusssystems ist.

Verschlusskappe und Verschlussunterteil der Erfindung sind aus Kunststoff. Verschlusskappe und Verschlussunterteil können aus verschiedenen Kunststoffen sein, sind aber vorzugsweise aus demselben Material. Dabei umfasst der Begriff Kunststoff hier auch Kunststoffgemische. Der Kunststoff ist vorzugsweise formsteif. Vorzugsweise ist der Kunststoff thermoplastisch und eignet sich zur Verwendung im Spritzgussverfahren, in der Blasformung, in koextrudierenden Verfahren oder im Laminatverfahren. Geeignete Kunststoffe für Verschlusskappe und/oder Verschlussunterteil sind beispielsweise Polyvinylchlorid (PVC), Polyethylen (PE), Polypropylen (PP), Polyethylenterephthalsäure PET) sowie Mischungen davon oder entsprechende Coplymere.

Verschlusskappe und Verschlussunterteil können permanent miteinander verbunden sein, zum Beispiel über ein Scharnier oder eine beliebige gleich wirkende Anordnung, wie zum Beispiel ein Knickverschluss, also ein an der Verbindungsstelle dünner ausgefertigter Kunststoffbereich, der eine flexible Bewegung erlaubt. Verschlusskappe und Verschlussunterteil können aber auch trennbar miteinander verbunden sein, zum Beispiel über ein Schraubgewinde oder einen Prellverschluss, oder eine Druckverschlussanordnung, wie zum Beispiel ein Schnappverschluss.

Das erfindungsgemäße Verschlusssystem kann serienmäßig mit einem Behälter, beispielsweise mittels eines ein- oder mehrgängigen Gewindes oder über eine Schnappverbindung oder Einrastverbindung, trennbar verbunden werden. Eine derartige Verbindung bietet zum Beispiel den Vorteil einer Wiederverwendung von Verschlusssystem und/oder Behälter. Das erfindungsgemäße Verschlusssystem kann aber auch nicht-trennbar mit einem Behälter verbunden sein, zum Beispiel durch Aufkleben, Verschweißen oder ähnliches. Letztere Ausführungsformen sind besonders geeignet für Behältnisse aus Mehrschichtmaterialien (beispielsweise Behälter, die sowohl Kunststoffe als beispielsweise auch Karton oder Metall(folien) enthalten), Metallbehälter oder Glasbehälter. Deshalb eignet sich das erfindungsgemäße Verschlusssystem generell für alle möglichen Behälter von Flüssigkeiten, rieselfähigen oder fließfähigen Stoffen wie z.B. Pasten, Cremes u.ä.

Ein Behälter, der das erfindungsgemäße Verschlusssystem umfasst, ist ebenfalls ein Gegenstand der Erfindung. Dabei kann das Verschlusssystem ein integraler Bestandteil des Behälters sein, wobei dann zumindest das Unterteil als integraler Bestandteil des Behälters ausgebildet ist, im Falle von Flaschen oder Tuben dann beispielsweise als Hals- und/oder Schulterbereich. Vorzugsweise ist der erfindungsgemäße Behälter eine Flasche, insbesondere eine Kunststoffflasche, eine Tube, insbesondere eine Kunststofftube, ein Kontainer, insbesondere ein Kunststoffkontainer, ein Mehrkomponentenkontainer, ein Mehrschichtenkontainer oder ein Karton-Kunstoffkontainer. Dabei kann das Verschlusssystem aus demselben Kunststoff sein wie der Behälter. Das Verschlusssystem kann aber auch ein Bestandteil eines Mehrkomponentensystems sein, wobei das erfindungsgemäße Verschlussystem dann auf einen Behälterhauptkörper aufgebracht sein kann, der Behälterkörper dabei aus demselben oder einem anderen Material besteht. Dabei kann das Verschlussystem auf den Behälter aufgeklebt, aufgeschraubt, durch Scharniere oder anderweitig verbunden sein. Derartige Mehrkomponentenbehälter können z.B. Glasbehälter, Kartonbehälter oder Metallbehälter sein, wobei das Verschlusssystem durch ein geeignetes Klebeverfahren oder Befestigungsmittel an den entsprechenden Hauptkörper angebracht wird.

In einer bevorzugten Ausführungsform der Erfindung handelt es sich bei dem Behälter um Behälter zum Aufbewahren von Flüssigkeiten, rieselfähigen oder fließfähigen (d.h. viskosen) Stoffen wie z.B. Pasten oder Cremes. Insbesondere findet die vorliegende Erfindung Anwendung in Behältern für Kosmetika, Behältern für Getränke, Behältern für Haushaltsreiniger, Geschirrspülmittel, Behältern für Waschmittel, Behälter für Körper- und Haarpflegeprodukte, Behälter für flüssige Lebensmittel wie z B. Milch, Sahne oder Getränke.

Geeignete Verfahren, mit dem erfindungsgemäße Verschlusssysteme hergestellt werden können, sind beispielsweise Extrusionsverfahren, Blasverformung, Spritzgießverfahren oder Compressionsmoulding-Verfahren. Dabei wird beispielsweise ein geeigneter Kunststoff erhitzt und in eine entsprechende Ausformung durch Druck eingebracht. Anschließend oder gleichzeitig wird der zweite Grundstoff, der die elastischere(n) Dichtfläche(n) ausbildet, an die vorgesehene Stelle(n) aufgebracht. Dies kann in einem einzigen Verfahrensschritt geschehen, wobei beide Kunststoffe gleichzeitig durch unterschiedliche Düsen in die geeignete Form gebracht werden. Alternativ ist es auch möglich, dass zunächst nur die Kappe und/oder das Unterteil hergestellt werden und die elastischere Dichtfläche(n) in einem weiteren Schritt auf den anderen Kunststoff aufgebracht wird (werden). Ebenso ist es möglich, die Dichtflächen separat herzustellen und dann mit dem Unterteil zu verschweißen oder zu verkleben.

Unterteil und/oder Kappe können bereits als Teil eines Behältervorkörpers ausgebildet sein, wobei in einem weiteren oder einem gleichzeitigen Schritt der Kunststoffbehälter ausgeformt wird z.B. durch Kalt- oder Warmverformung.

Ein bevorzugtes Verfahren zur Herstellung der erfindungsgemäßen Verschlusssysteme sind Spritzgießverfahren vorzugsweise im Mehrschicht- oder Mehrkomponenten-Spritzgießverfahren. Beispiele für Spritzgießverfahren werden in der WO97/40972 erwähnt. Gemäß Mehrkomponenten-Spritzgießverfahren wird in das Spritzgießwerkzeug zunächst eine sogenannte Umhüllungsschicht eingespritzt und nachfolgend oder simultan eine sogenannte Kernschicht. Auf diese Weise entsteht ein Behälter, dessen Komponenten aus unterschiedlichen Materialien bestehen, beispielsweise Dichtfläche und Kappe oder Verschlussunterteil. Ein Mehrschicht-Spritzgießverfahren wird beispielsweise in der EP 0 537 346 beschreiben. Ein derartiges Verfahren erlaubt die serienmäßige und kostengünstige Herstellung der Kunststoffverschlusssysteme.

Bevorzugt im Rahmen der Erfindung sind Kappe und Dichtfläche und/oder Verschlussunterteil und Dichtfläche integral gefertigt. Vorzugsweise werden Kappe und Dichtfläche und/oder Verschlussunterteil und Dichtfläche in einem Verfahrensschritt simultan gefertigt, was das Herstellungsverfahren vereinfacht und Kosten reduziert.

Die Dichtflächen können jedoch auch nachträglich angefügt werden, z.B. durch Aufschweißen, Verkleben, Rasten und/oder Einpressen.

Das Verschlusssystem kann zum Beispiel aus zwei oder mehr verschiedenen Kunststoffen im Mehrkomponentenspritzgießverfahren ebenfalls integral gefertigt werden.

In einer weiteren Ausführungsform der Erfindung ist die Dichtfläche an der Kappe und/oder am Verschlussunterteil aus einem elastischen Material und so ausgestaltet, dass sie sich durch Druckeinwirkung, der vom Inneren des Behälters erzeugt wird, bewegt und sich entweder reversibel nach Außen hin öffnet oder durch die Bewegung eine an der Kappe oder dem Verschlussunterteil angebrachte Öffnung, die die Dichtfläche zuvor verschlossen hatte, freigibt. Ein derartiges Dichtsystem wird als abgasendes Dichtsystem bezeichnet und ermöglicht einen Druckausgleich, beispielsweise in Behältern, die fermentierende oder ausgasende Inhaltsstoffe aufweisen oder bilden können. Ein derartiges Verschlusssystem bildet dann einen Schutz vor dem Bersten des Kontainers. Ein derartiges System kann durch eine entsprechende, ventilartige Ausgestaltung des erfindungsgemäßen Verschlusssystems und mit den erfindungsgemäßen Dichtflächen wie oben beschrieben oder durch eine entsprechende Ausgestaltung der erfindungsgemäßen Dichtflächen verwirklicht werden.

Einzelne Ausführungsformen der Erfindung werden unter Bezugnahme auf Abbildungen näher erläutert. Die Abbildungen sind nur grobe schematische Zeichnungen und dienen der Verdeutlichung der Erfindung.

Es zeigen:
- Abbildung 1:: Eine schematische Abbildung eines Verschlusssystems ausgebildet als Flip-Top-Verschluss,
- Abbildung 2:: Eine schematische Abbildung eines Verschlusssystems ausgebildet als Push-Pull-Verschluss,
- Abbildung 3:: Eine schematische Abbildung eines Verschlusssystems ausgebildet als Getränkekartonverschluss,
- Abbildung 4:: Eine schematische Abbildung eines Verschlusssystems ausgebildet als Schraubverschluss.

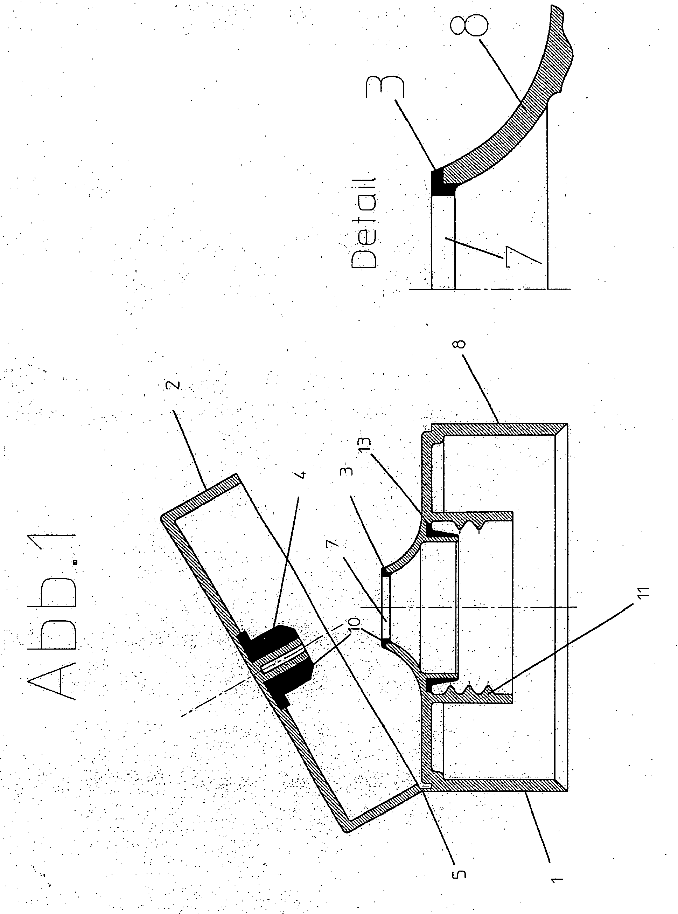

Abbildung 1 zeigt schematisch einen symmetrischen Querschnitt eines erfindungsgemäßen Flip-Top-Verschlusssystems in geöffnetem Zustand. Der Verschluss, der in Abbildung 1 dargestellt ist, kann als Form- oder Kraftverschluss ausgefertigt sein.

Die Verschlusskappe (2) ist über einen Knickverschluss (oder Scharnier) (5) mit einem Verschlussunterteil (1) verbunden. Die Kappe weist die Dichtflächen (4) auf, die mit den entsprechenden Dichtflächen (3) der Austrittsöffnung (7) im verschlossenen Zustand zusammenwirken und die Austrittsöffnung dichtfest verschließen. Das Unterteil (1) weist in dieser Ausführungsform ein Schraubgewinde (11) auf, mit dem das Verschlusssystem auf einen Behälter mit einem entsprechenden Gegengewinde aufgebracht werden kann. Die umlaufende Dichtfläche (13) dient zur Abdichtung gegen den Behälter.

In der in Abbildung 1 dargestellten Ausführungsform der Erfindung sind die Dichtflächen (3),(4) und (13) aus demselben (elastischeren) Material (10) als das Material (8) von Verschlussunterteil und Kappe.

Obwohl in der Abbildung nicht dargestellt, ist es im Rahmen der Erfindung ebenso möglich, dass die Dichtflächen (3) der Austrittsöffnung (7) aus einem elastischeren oder weniger elastischeren Kunststoff sind als die Dichtflächen (4) der Kappe. In einer anderen Ausgestaltung der Erfindung ist die Dichtfläche (3) oder die Dichtfläche (4) aus demselben Kunststoff wie Unterteil (1) und/oder Kappe (2).

Ebenso ist es im Rahmen der Erfindung möglich, dass das Verschlusssystem nur eine Dichtfläche (3) und keine Dichtfläche (4), oder nur eine Dichtfläche (4) und keine Dichtfläche (3) aufweist.

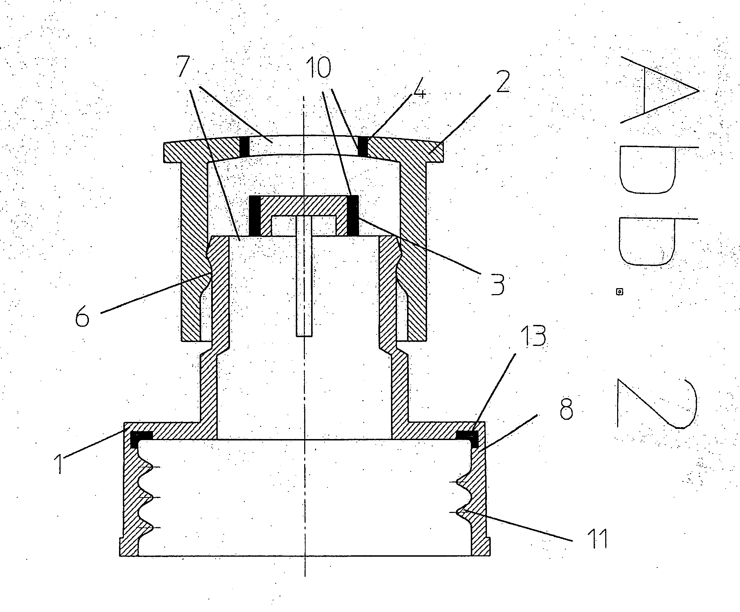

Abbildung 2 zeigt schematisch einen symmetrischen Querschnitt eines erfindungsgemäßen Verschlusssystems ausgestaltet als Push-Pull-Verschluss im geöffneten Zustand. Hierbei können Kappe (2) und Unterteil (1) durch eine entsprechende zusammenwirkende Anordnung (6) permanent oder nicht permanent verbunden sein.

In der in Abbildung 2 dargestellten Ausführungsform weist die Kappe (2) eine Austrittsöffnung mit der Dichtfläche (4) auf. Das Verschlussunterteil (1) hat eine Austrittsöffnung (7) mit der Dichtfläche (3). Die umlaufende Dichtfläche (13) dient zur Abdichtung gegen den Behälter.

Dichtfläche (4) der Kappe (2) und Dichtflächen (3) und (13) des Unterteils (1) sind aus elastischerem Material (10) als Kappe und Unterteil (8). Dichtfläche (4) kann aber auch aus elastischerem oder weniger elastischem Material als Dichtfläche (3) sein.

Ebenso ist es im Rahmen der Erfindung möglich, dass das Verschlusssystem nur eine Dichtfläche (3) und keine Dichtfläche (4) oder nur eine Dichtfläche (4) und keine Dichtfläche (3) aufweist.

Die in Abbildung 2 dargestellte Ausführungsform des erfindungsgemäßen Verschlusssystems verfügt über ein Schraubgewinde (11) zum Aufbringen auf einen nicht näher dargestellten Behälter.

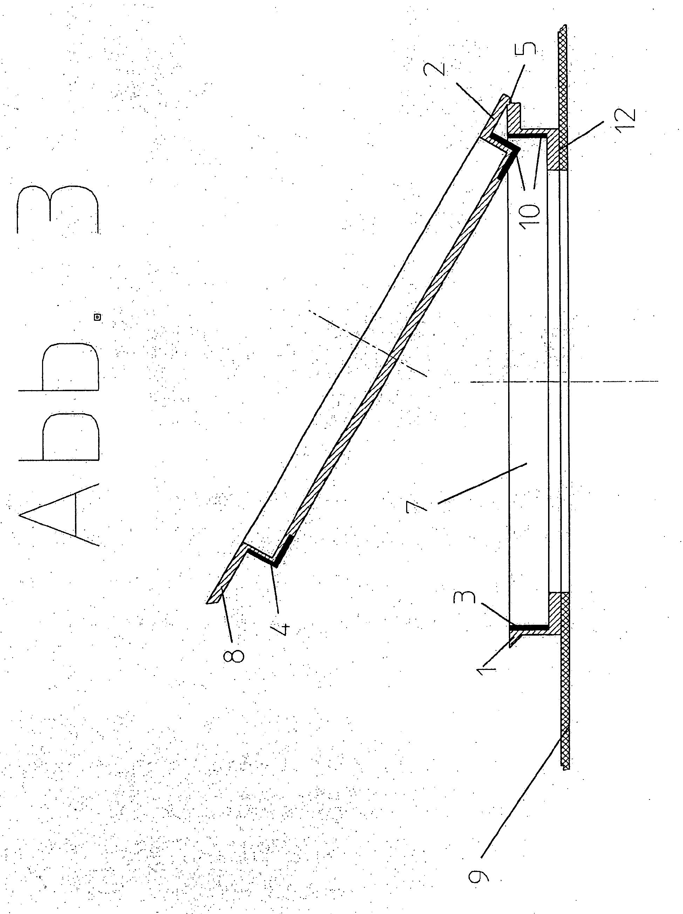

Abbildung 3 zeigt einen schematischen Querschnitt eines erfindungsgemäßen Getränkekartons mit erfindungsgemäßem Verschlusssystem in geöffnetem Zustand. Das Verschlussunterteil (1) ist mit dem Kartonbehälter (9) über eine Klebeschicht oder Schweissnaht (12) permanent verbunden. Das Unterteil (1) der in der Abbildung 3 gezeigten Ausführungsform der Erfindung weist eine Austrittsöffnung (7) mit der Dichtfläche (3) auf. Die Kappe (2) ist über eine Knickverbindung (5) (der Kunststoff ist an dieser Stelle dünner angefertigt, so dass eine flexible Verschluss- und Öffnungsbewegung durchgeführt werden kann) permanent oder über ein Scharnier (5) permanent oder lösbar mit dem Unterteil (1) verbunden. Die Verschlusskappe (2) weist die Dichtfläche (4) auf. Dichtflächen (4) und (3) sind aus demselben, elastischeren Material (10) als der Kunststoff (8) von Kappe und Unterteil. Ebenso ist es im Rahmen der Erfindung möglich, die Dichtfläche (4) aus einem elastischeren oder weniger elastischen Material als die Dichtfläche (3) auszubilden. Ebenso ist es im Rahmen der Erfindung möglich, dass das Verschlusssystem nur eine Dichtfläche (3) und keine Dichtfläche (4) oder nur eine Dichtfläche (4) und keine Dichtfläche (3) aufweist.

Verschlusssystem und Behälter der in Abbildung 3 dargestellte Ausführungsform können aus unterschiedlichem oder identischem Material sein.

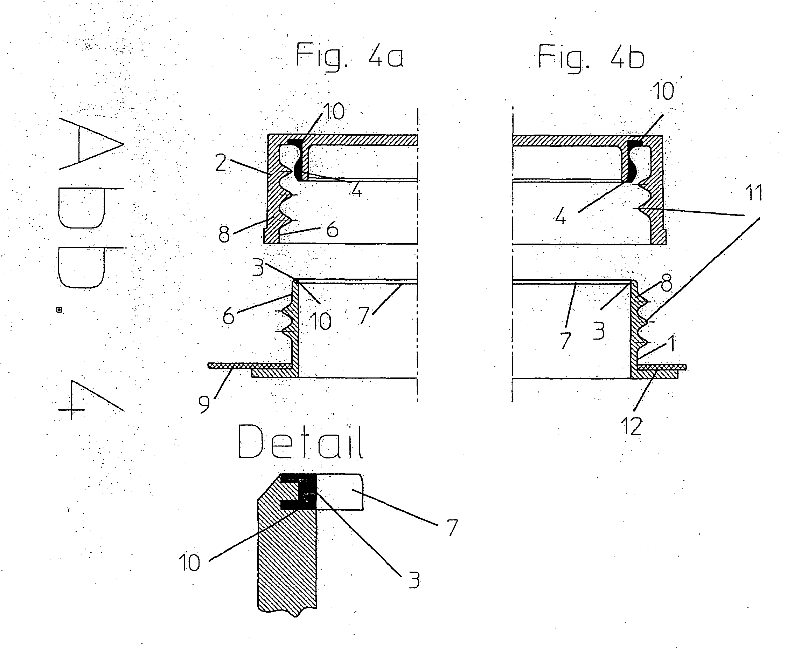

Die Abbildung 4 zeigt ein erfindungsgemäßes Verschlusssystem, das als Schraubverschluss ausgestaltet ist, im schematischen Querschnitt in geöffnetem (getrennten) Zustand. Aufschrauben der Kappe (2) führt zum Verschliessen der Austrittsöffnung (7) des Unterteils (1), wobei in der Figur 4a nur die linke Hälfte des Verschlusssystems und in der Figur 4b die rechte Hälfte des Verschlusssystems dargestellt ist. Angedeutet ist eine permanente Verbindung von Unterteil (1) und Behälter (9), beispielsweise durch eine Klebeschicht oder Schweißnaht (12). Eine nicht permanente Verbindung, beispielsweise durch eine Einrast-Anordnung, ist ebenso möglich. Die Verschlusskappe (2) weist eine Dichtfläche (4) auf, die über die Dichtfläche (3) der Austrittsöffnung (7) letztere zusammen mit der Kappe (2) im geschlossenen Zustand dichtfest verschließt. Auch in dieser dargestellten Ausführungsform der Erfindung sind die Dichtflächen aus identischem Material (10), das elastischer ist als der Kunststoff (8) von Kappe und Unterteil. Verschlusssystem und Dichtflächen können aber auch ausgestaltet sein wie bereits für die anderen Abbildungen beschrieben.

## Patentansprüche

1. Ein Verschlusssystem umfassend eine Kunststoffkappe (2) und ein Kunststoffunterteil (1) mit einer Austrittsöffnung (7), wobei die Kappe (2) derart ausgestaltet ist, dass sie mit der Austrittsöffnung (7) über eine erste Dichtfläche dichtfest verschließbar ist, und die erste Dichtfläche entweder ein Bestandteil der Kappe (2) oder des Unterteils (1) und aus einem elastischeren Material ist als die Kunststoffkappe oder das Kunststoffunterteil.

2. Das Verschlusssystem nach Anspruch 1, wobei die mindestens eine Dichtfläche (4) ein Bestandteil der Kappe (2) ist und das Verschlussystem eine zweite Dichtfläche (3) aufweist, die Bestandteil des Unterteils (1) ist, und die zusammen mit der ersten Dichtfläche (4) die Austrittsöffnung (7) im geschlossenen Zustand dichtfest verschließt.

3. Verschlusssystem nach Anspruch 1 oder 2, wobei das Unterteil (1) eine dritte Dichtfläche (13) zur Dichtung gegenüber dem Behälter aufweist.

4. Das Verschlusssystem nach Anspruch 2 oder 3, wobei die erste Dichtfläche aus elastischerem Material als die zweite Dichtfläche besteht.

5. Das Verschlusssystem nach Anspruch 2 oder 3, wobei die erste Dichtfläche aus demselben oder einem weniger elastischen Material als die zweite Dichtfläche besteht.

6. Das Verschlusssystem nach einem der Ansprüche 2 bis 5, wobei die zweite und/oder dritte Dichtfläche aus elastischerem Material als das Kunststoffunterteil besteht.

7. Das Verschlusssystem nach einem beliebigen der vorhergehenden Ansprüche, wobei die Kappe und das Unterteil aus demselben Kunststoff sind.

8. Das Verschlusssystem nach einem beliebigen der vorhergehenden Ansprüche, wobei die Kappe und das Unterteil als integrales Bauteil gefertigt sind.

9. Das Verschlusssystem nach einem beliebigen der vorhergehenden Ansprüche, wobei die erste Dichtfläche ein integrales Bauteil der Verschlusskappe ist.

10. Das Verschlusssystem nach einem beliebigen der vorhergehenden Ansprüche, wobei die zweite und/oder Dichtfläche ein integraler Bestandteil des Verschlussunterteils ist.

11. Ein Behälter, der ein Verschlusssystem nach einem beliebigen der vorhergehenden Ansprüche aufweist.

12. Ein Verfahren zur Herstellung eines Verschlussystems nach einen der Ansprüche 1 bis 9 umfassend die Schritte
a) Herstellen einer Kunststoffkappe mittels Spritzgußverfahren oder Compressionmoulding
b) Herstellen eines Unterteils mittels Spritzgußverfahren oder Compressionmoulding
c) Aufbringen der Dichtfläche(n) mittels Spritzgußverfahrens oder Compressionmoulding.

13. Das Verfahren nach Anspruch 12, wobei Schritt c) gleichzeitig mit Schritt a) oder b) durchgeführt wird.
